# DEMANDE DE BREVET EUROPEEN

(11) **EP 1 496 645 A1**
(43) Date de publication de la demande: **12.01.2005**
(21) Numéro de dépôt: 03405503.8
(22) Date de dépôt: 07.07.2003
(51) Int. Cl.: H04L 9/30, G06F 7/72

(54) **Méthode d'encryption RSA d'une donnée de valeur imprévisible**

(71) Demandeur: Nagracard S.A., 1033 Cheseaux-sur-Lausanne (CH)
(72) Inventeur: Sasselli, Marco, 1803 Chardonne (CH); Ksontini, Rached, 1018 Lausanne (CH)
(74) Mandataire: Wenger, Joel-Théophile

(57) **Abrégé**

Le but de la présente invention est d'encrypter ou signer à l'aide de l'algorithme RSA une donnée D représentant un nombre plus grand que le module M de la clé, tout en garantissant, lors de la décryption, de retrouver l'intégralité des données.

Ce but est atteint par une méthode de réduction de la donnée D et de la formation d'une donnée réduite D' de valeur inférieure au module M, transfert du ou des bits d'ajustement dans une mémoire temporaire.

Ainsi la méthode de l'invention est basée sur un ajustement de la donnée d'entrée D et la sauvegarde des bits ayant fait l'objet de cet ajustement pour être joint au résultat encrypté.

## Description

La présente invention concerne le domaine de la transmission de données encryptées, en particulier lorsque l'algorithme cryptographique à clés asymétriques RSA est concerné.

Une clé publique RSA est composée de deux nombres: un exposant public et un module. La clé privée associée à cette clé publique est elle-aussi composée de deux nombres: un exposant privé et le même module. L'algorithme RSA peut être utilisé pour encrypter ou signer une donnée représentant un nombre. La clé publique est utilisée pour encrypter, et la clé privée pour décrypter. Inversement, en cas de signature, la clé privée permet de signer, alors que la clé publique permet de vérifier la signature.

L'algorithme RSA a ceci de particulier que pour que la donnée encryptée avec la clé publique, respectivement signée avec la clé privée, puissent être correctement décryptée avec la clé privée, respectivement vérifiée avec la clé publique, il faut que le nombre représenté par cette donnée soit un nombre strictement inférieur au module de la clé.

Cette caractéristique est imposée par l'algorithme RSA et tous les utilisateurs de cet algorithme effectuent une vérification de cette condition avant l'encryption ou la signature d'une donnée.

En général, les données et les clés traitées aujourd'hui dans le monde de la cryptographie sont des séquences de bits. Une telle donnée représente de manière naturelle un nombre écrit en base 2. Si l'algorithme RSA est utilisé et si la donnée à encrypter est une séquence de bits représentant un nombre supérieur ou égal au module de la clé, alors la donnée peut être scindée en plusieurs séquences de longueur plus petite et chaque séquence doit alors être encryptée individuellement.

On considère le cas où la donnée et le module de la clé sont des séquences de bits de longueur identique. En effet, lorsque l'algorithme RSA est utilisé, les données considérées sont souvent des séquences de bits de même longueur que le module de la clé, typiquement des séquences de 1024 ou 2048 bits. Ainsi, la vérification sus-mentionnée peut se faire en s'arrangeant pour disposer d'une clé RSA dont le module ait son bit de poids fort égal à 1 et d'une donnée ayant le bit de poids fort égal à 0.

Cette simple vérification assure la restitution de la donnée après décryption.

Dans certains cas, la donnée est une séquence aléatoire de même longueur que le module de la clé et il n'est pas possible de modifier la donnée d'entrée afin de remplir la condition. Ceci est le cas lorsque la donnée à encrypter est issue d'un autre processus tel qu'une encryption. Dans ce cas, il n'est plus possible de modifier la donnée d'entrée sans compromettre l'étape précédente. Il n'est en effet pas rare que deux encryptions RSA avec deux modules différents de même longueur soient effectuées en série et, dans un tel cas, le résultat intermédiaire est une séquence de bits de même longueur que les modules, mais dont la valeur est incontrôlable.

Le but de la présente invention est d'encrypter ou signer à l'aide de l'algorithme RSA une donnée représentant un nombre plus grand que le module de la clé, tout en garantissant, lors de la décryption, de retrouver l'intégralité des données.

Ce but est atteint par une méthode d'encryption d'une donnée D basée sur un algorithme RSA et une clé K ayant un module M, cette méthode comprenant les étapes suivantes :
- comparaison de la valeur du module M de la clé K et de la donnée D,
- si la donnée D est supérieure ou égale au module M de la clé K, réduction de la valeur de la donnée D et formation d'une donnée réduite D' de valeur inférieure au module M, transfert du ou des bits d'ajustement dans une mémoire temporaire,
- encryption de la donnée D' réduite par la clé K,
- composition d'un ensemble formé de la donnée réduite encryptée et des n bits d'ajustement sauvegardés.

Ainsi la méthode de l'invention est basée sur un ajustement de la donnée d'entrée D et la sauvegarde des bits ayant fait l'objet de cet ajustement pour être joint au résultat encrypté. Il est à noter que si la donnée d'entrée est de même longueur que le module, typiquement 1024 ou 2048 bits, et si le bit de poids fort du module de la clé vaut 1, alors un bit d'ajustement suffit.

Ce ou ces bits d'ajustement peuvent être inclus dans un message qui sera transmis encrypté par une clé système utilisée pour la transmission des données vers le destinataire.

L'ensemble ainsi formé comprend le résultat encrypté et le bit (pour cet exemple) qui aura été extrait de la donnée D puis mis à zéro avant le processus d'encryption.

Lors de l'opération inverse, la décryption aura lieu sur la donnée encryptée, et une fois le résultat obtenu, l'on va réintroduire le ou les bits d'ajustement.

L'invention sera mieux comprise grâce à la description détaillée qui va suivre et qui se réfère aux dessins annexés qui sont donnés à titre d'exemple nullement limitatif, à savoir:
- la figure 1 décrit un processus de double encryption selon l'invention,
- les figures 2a et 2b illustrent un exemple de résultats possibles selon une clé déterminée.

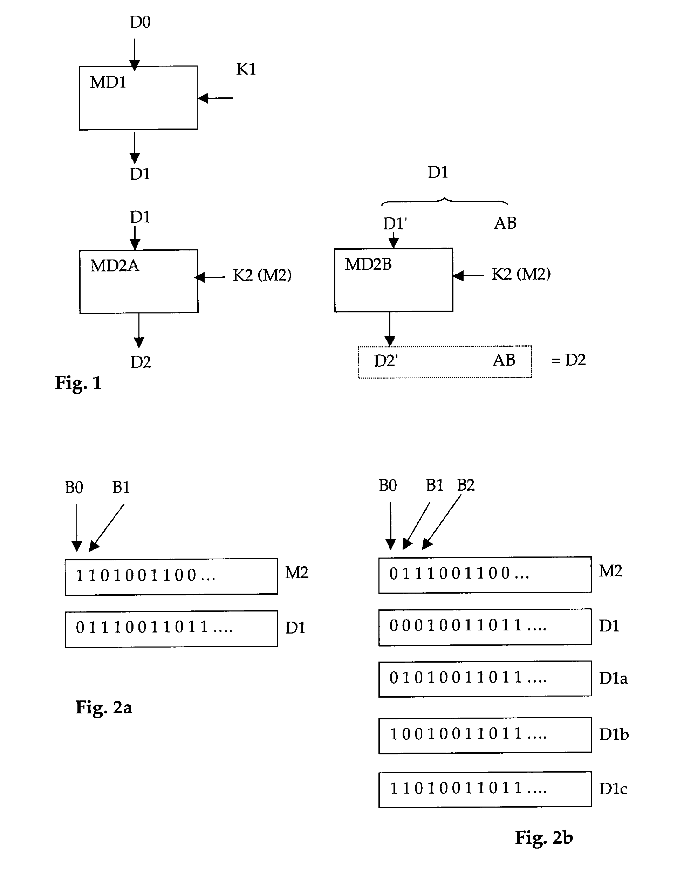

Sur la figure 1, le module MD1 illustre un premier module d'encryption d'une donnée D0 utilisant une première clé K1. Ce module peut être de type symétrique ou asymétrique. Ce module MD1 n'est d'ailleurs pas nécessairement un module d'encryption et peut être par exemple un module de compression de données.

Ce premier module produit une sortie D1. Cette donnée a, à priori, une valeur non prédéterminée. A partir de ce point, selon la valeur de la donnée D1 et la valeur du module M2 de la clé K2, il se peut que le résultat D2 ne contienne pas toute l'information de D1.

On suppose que la donnée D1 est une séquence de bits de même longueur que le module M2 de la clé. Si la valeur du module M2 est supérieure à la valeur de la donnée D1, on peut sans autre appliquer la donnée D1 au module MD2A sans modification.

Dans le cas contraire, l'on va modifier la donnée D1 pour une nouvelle valeur D1' dont la valeur est inférieure ou égale à la valeur du module M2 de la clé K2. Cette modification a pour conséquence de mettre des bits de poids fort de la valeur D1' à zéro et ces bits AB seront stockés dans une mémoire temporaire.

Pour ce faire, il existe un grand nombre de méthodes que se soit par action sur les bits de poids forts ou les bits de poids faibles, voire agir sur des bits quelconques de la donnée D1.

A titre d'exemple, une première méthode utilise la fonction de décalage. On décale la donnée vers les bits de poids faibes et à chaque décalage d'un bit, un bit à zéro est introduit du coté du bit de poids fort MSB et on récupère le bit sortant pour former le ou les bits d'ajustement AB.

A chaque décalage d'un bit, on compare le résultat avec le module de la clé et si la donnée ainsi modifiée est inférieure au module M2, on stoppe le processus. Cette méthode réduit la donnée en transférant un ou des bits de poids faible vers les bits d'ajustement AB et en introduisant un ou des bits à zéro sur les bits de poids forts.

Il est à noter que la donnée D peut être subdivisée en bloc selon les capacités du processeur. Ainsi, une donnée de 1024 bits traitée par un processeur de 16 bits sera avantageusement divisée en 64 blocs de 16 bits. L'opération de réduction ne peut alors concerner que le bloc de poids fort et le décalage sera effectué sur ce bloc, ce qui est plus rapide que de décaler 1024 bits. La comparaison entre le module de la clé et la donnée serait, dans cet exemple, uniquement effectuée sur les blocs de poids fort respectif.

Une seconde méthode utilise l'extraction de bits de poids forts. L'opération sur les bits de poids fort MSB consiste à transférer un bit de poids fort vers le bit d'ajustement AB et mettre à zéro ce bit dans la donnée. A chaque opération, on compare la nouvelle donnée avec le module de la clé et on répète l'opération avec le bit suivant jusqu'à ce que le module de la clé soit supérieur à la donnée.

La donnée modifiée D1' peut dès lors être traitée par le module MD2B sur la base de la clé K2.

Une fois le processus d'encryption MD2B terminé, les deux données D2' et AB forment un tout pour permettre de retrouver la donnée D1.

Dans la pratique, la donnée D2' forme tout ou partie d'un message qui comprend également un entête. Cet entête peut être utilisé pour transmettre le ou les bits d'ajustement AB.

Pour retrouver la donnée originale D1, on appliquera D2' au module d'encryption MD2B et on retrouvera la données D1'. Sur la base des bits d'ajustement AB, il sera alors possible de retrouver D1 selon l'une des deux méthodes expliquées ci-dessus, ou selon une autre méthode définie au préalable.

Dans une autre forme de réalisation, on ne sauve pas les bits d'ajustement lors de la réduction de la taille de la donnée avant le traitement par le module d'encryption RSA.

Ainsi, lors de l'opération inverse soit la décryption des données, D2 est appliqué au premier module MD2A sur la base de la clé privée K2v et il existe donc une incertitude sur l'exactitude de la donnée D1 ainsi obtenue.

C'est pourquoi, selon l'invention, une fois le résultat D1 connu, on applique ce résultat au module de traitement supérieur, dans notre exemple le module d'encryption MD1 et on analyse le résultat. Il est admis que la donnée résultante D0 contient des moyens de vérification tels qu'un CRC, Checksum ou autre format qui permette de déterminer si elle est correcte.

Si ce résultat ne répond pas aux critères de contrôle, ceci signifie que la donnée D1 a été réduite avant de l'appliquer au deuxième module MD2A. La présente invention consiste à utiliser la méthode de réduction inversement, et d'appliquer ce résultat sur le module d'encryption MD1 et vérifier la validité du résultat.

Pour notre exemple, nous utiliserons la méthode agissant sur les bits de poids forts MSB telle que décrite plus haut.

Sur la figure 2a, la donnée D1 a un bit de poids fort à 0. Si ce bit avait été à 1, D1 serait plus grand que le module M2 de la clé et il existe donc une possibilité que la donnée D1 ait été réduite. Ceci signifie qu'il existe deux possibilités soit que le bit B0 de D1 a été mis à zéro, soit qu'il ait été initialement déjà à zéro.

Afin de lever cette incertitude, il est possible de considérer un premier cas où le bit B0 aurait dû être à 1 et appliquer cette valeur au module MD1. Dans le cas illustré dans la figure 2a, il n'existe que deux possibilités du fait que la mise à 1 du bit B0 a pour conséquence que la valeur D1 devient plus grande que la clé; inversement, si la mise à 1 d'un bit ne provoque pas le dépassement de la valeur de la donnée par rapport au module de la clé, il n'y a aucune raison pour que ce bit ait été mis à 0 lors de la phase de réduction. Le bit B0 de D1 peut soit être à 1 ou soit être à 0 et il faudra donc deux essais pour déterminer le résultat correct.

Il se peut que la valeur du module M2 de la clé soit telle que ce n'est plus un bit qui est concerné mais plusieurs. Ceci est illustré par la figure 2b. Pour déterminer les combinaisons possibles, on considère le bit non nul de poids le plus fort du module de la clé (ici le bit B1) et on met le même bit à 1 dans le résultat illustré par D1a.

Il est à noter qu'avant d'appliquer cette valeur au module d'encryption MD1, il est utile de vérifier si le résultat D1a est plus grand que le module M2. Ceci est dépendant des autres bits de la valeur D1a et dans notre cas, il apparaît que la nouvelle valeur D1a est plus petite que la clé et donc n'a pas pu être réduite lors de l'opération d'encryption. On en déduit que le bit B1 n'a pas été modifié lors de la réduction de la donnée. Ainsi le seul bit qui a pu être modifié lors de la réduction est le bit B0.

Il existe donc une autre possibilité représentée par D1b, dont les deux premiers bits sont respectivement 1,0. Il faudra donc essayer la combinaison D1 b si le résultat obtenu à partir de D1 n'est pas concluant.

Ainsi, le nombre d'essais va dépendre de la valeur du module M de la clé, plus le module est grand (par exemple le bit B0 est à 1) plus petit sera le nombre de possibilités. Plus précisément, si le bit non nul de poids le plus fort de M est le bit Bi, alors il y aura 2ⁱ possibilités à tester au maximum dans le cas où la donnée D1', obtenue à partir de la donnée D1 en forçant le bit Bi à 1, est un nombre inférieur à M. Il y aura 2ⁱ⁺¹ possibilités à tester au maximum dans le cas où la donnée D1' est un nombre supérieur ou égal à M.

D'une manière générale, on détermine le bit Bj de poids le plus faible qui permet à la donnée D de devenir plus grande que la clé K lorsqu'il est forcé à 1, puis on teste toutes les combinaisons plausibles sur les bits de poids plus fort que le poids de ce bit B.

## Revendications

1. Méthode d'encryption d'une donnée (D) basée sur un algorithme RSA et une clé (K) ayant un module (M), cette méthode comprenant les étapes suivantes :
- comparaison de la valeur du module (M) de la clé (K) et de la donnée (D),
- si la donnée (D) est supérieure ou égale au module (M) de la clé (K), réduction de la valeur de la donnée (D) et formation d'une donnée réduite (D') de valeur inférieure au module (M), transfert du ou des bits d'ajustement (AB) dans une mémoire temporaire,
- encryption de la donnée réduite (D') par la clé (K),
- composition d'un ensemble formé de la donnée réduite encryptée et des n bits d'ajustement (AB) sauvegardés.

2. Méthode d'encryption d'une donnée (D) basée sur un algorithme RSA selon la revendication 1, **caractérisé en ce que** la réduction est effectuée par mise à zéro d'un ou plusieurs bits de poids fort (MSB), ce ou ces bits étant préalablement déplacés dans le ou les bits d'ajustement (AB).

3. Méthode d'encryption d'une donnée (D) basée sur un algorithme RSA selon la revendication 1, **caractérisé en ce que** la réduction est effectuée par décalage successif de la donnée (D) vers le bit de poids faible (LSB), le ou les bits sortant formant le ou les bits d'ajustement (AB), le ou les bits entrants côté poids fort étant à zéro.

4. Méthode d'encryption d'une donnée (D) basée sur un algorithme RSA selon la revendication 3, la donnée (D) étant divisée par bloc, le bit de poids faible étant le bit de poids faible d'un bloc, l'opération de réduction étant effectuée sur le bloc de poids fort.

5. Méthode d'encryption d'une donnée (D) basée sur un algorithme RSA selon les revendications 1 à 4, **caractérisé en ce que** la donnée réduite (D') encryptée est placée dans un message, ce message comprenant un entête dans lequel sont placés le ou les bits d'ajustement (AB).
